# EUROPEAN PATENT SPECIFICATION

(11) **EP 4 031 440 B1**
(45) Date of publication and mention of the grant of the patent: **01.11.2023**
(21) Application number: 20792480.4
(22) Date of filing: 18.09.2020
(51) Int. Cl.: B62D 35/00, B62D 37/02

(54) **SPOILER FOR A VEHICLE COMPRISING AN INTEGRATED LOCKING DEVICE**
SPOILER FÜR EIN FAHRZEUG MIT INTEGRIERTER VERRIEGELUNGSVORRICHTUNG
BECQUET POUR VÉHICULE COMPRENANT UN DISPOSITIF DE VERROUILLAGE INTÉGRÉ

(30) Priority: 20.09.2019 IT 201900016856
(43) Date of publication of application: 27.07.2022
(73) Proprietor: IVECO S.P.A., 10156 Torino (IT)
(72) Inventor: CASA, Fabrizio, 13044 Crescentino (VC) (IT); DE MOLLI, Romeo, 21040 Castronno (VA) (IT)
(74) Representative: Studio Torta S.p.A.
(86) International application number: PCT/IB2020/058725
(87) International publication number: WO 2021/053610

(56) References cited:
- EP-A1- 3 199 431
- GB-A- 2 497 211
- US-A1- 2011 042 998
- US-A1- 2012 139 290

## Description

### TECHNICAL FIELD

The invention relates to a spoiler for a vehicle, in particular to a spoiler for a heavy vehicle comprising an integrated locking device.

### KNOWN STATE OF THE ART

Heavy vehicles, such as for example trucks, comprise lateral spoilers, which are carried by the cabin and are configured to assume a closed rest position, in which they face the rear wall of the cabin, and an open operating position, in which they are perpendicular to the aforesaid rear wall, so as to be continuous with the profile of the lateral wall of the cabin.

These spoilers, in the open position, are used to reduce the aerodynamic resistance generated by the air flow flowing along the lateral wall of the vehicle, which, without the presence of the spoiler, could generate vortexes between the cabin and the trailer. These vortexes tend to generate a force that is contrary to the direction of the vehicle, thus increasing the fuel consumptions of the vehicle; in addition, the vortexes tend to generate noise and vibrations.

Therefore, locking devices are known, which allow these lateral spoilers to be locked in the aforesaid open and closed positions and, in parallel, allow users to shift from one position to the other.

Elastic elements are normally used, such as air springs, which are fixed between the rear wall of the cabin and the spoiler. These elastic elements have a rigidity that is such as to yield and allow the spoiler to move between the open and closed positions and, at the same time, a rigidity that is such as to allow the spoiler to be kept closed or open once it has been moved.

An example of these elastic elements for lateral spoilers is disclosed in WO2008024386.

However, the use of these elastic elements causes some problems. First of all, they can easily yield and shift from the open position to the closed one, or vice versa, of the spoiler; therefore, in order to prevent this from happening, further mechanical locks need to be used, such as shape couplings, which further lock the spoiler once it has correctly been placed in the position, for example the closed one. Furthermore, gas springs behave differently according to the temperature, thus generating faults under special atmospheric conditions.

Furthermore, said elastic elements require special supports both on the cabin side and of the spoiler side, thus making it difficult and expensive for users to install them. Moreover, the supports, in the closed configuration, increase the axial space taken up by the spoiler at the back of the cabin of the vehicle.

Furthermore, these systems can be designed for two sole positions of the spoiler, namely open position and closed position, relative to the cabin.

Therefore, heavy vehicle spoilers are needed, which are capable of solving the technical problems of the prior art described above.

Example of known systems are disclosed in US2011042998 A1, US2012139290 A1, GB2497211 A or EP3199431 A1.

The object of the invention is to fulfil the needs discussed above in an optimized and economic fashion.

### SUMMARY OF THE INVENTION

The aforesaid object is reached by a vehicle spoiler and by a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a perspective view of a spoiler according to the invention;
- figure 2 is a perspective view showing a portion of the spoiler of figure 1;
- figure 3 is a perspective view showing a further portion of the spoiler of figure 1;
- figure 4 is a perspective view of a locking device integrated in the spoiler according to the invention;
- figure 5 is a longitudinal section view of the locking device of figure 4;
- figure 6A is a view from above of a spoiler according to the invention in a first operating condition;
- figure 6B is a view from above of a spoiler according to the invention in an intermediate operating condition between a first and a second operating condition; and
- figure 6C is a view from above of a spoiler according to the invention in a second operating condition.

### DETAILED DESCRIPTION OF THE INVENTION

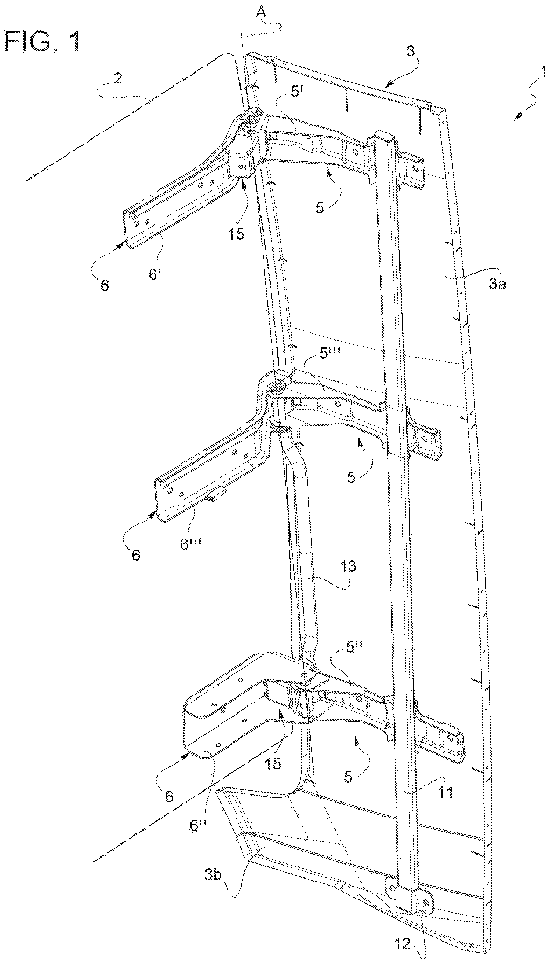

Figure 1 shows a spoiler system 1 for a heavy vehicle, in particular a lateral spoiler 1 for a cabin 2 of said vehicle.

The spoiler system 1 basically comprises a wall 3 having a shape depending on the style of the vehicle and, in the example shown herein, comprising a main portion 3a with a substantially rectangular shape and a projecting portion 3b extending from a corner of the main portion 3a.

The spoiler system 1 further comprises a connection apparatus 4, which is configured to connect the wall 3 to the cabin 2 of the vehicle so as to allow the wall 3 to be locked in a first open position relative to the cabin 2, in which said wall 3 is substantially perpendicular to a rear wall of the cabin and is continuous with a lateral wall thereof, so as to allow the wall 3 to be locked in a second closed position relative to the cabin 2, in which said wall 3 faces the rear wall of the cabin 2, and so as to allow users to shift between the aforesaid first and second positions.

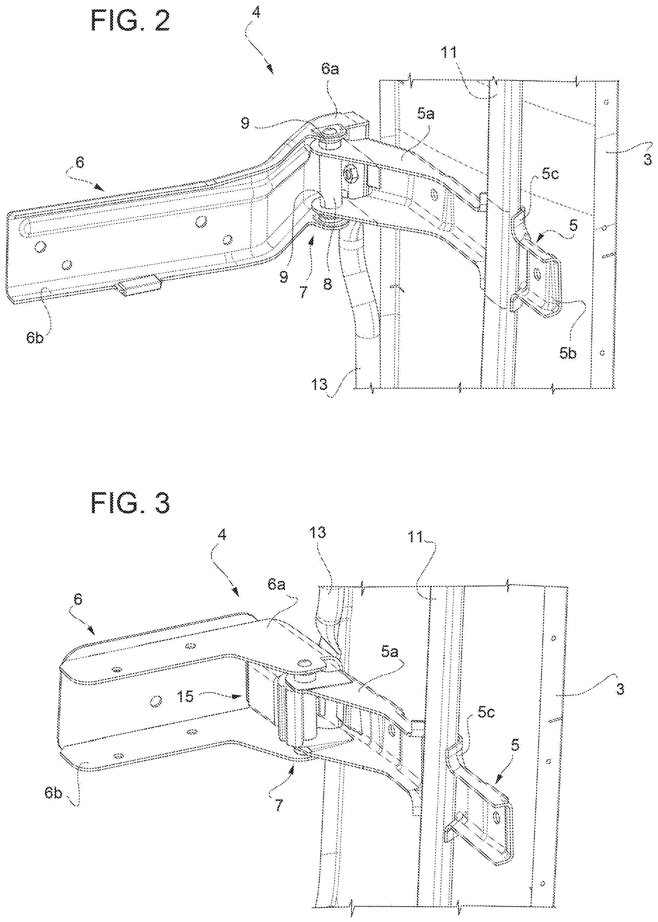

More in detail, according to figures 2 and 3, the connection apparatus 4 basically comprises a first plurality of brackets 5, which are fixed to the wall 3, and a second plurality of brackets 6, which can be fixed to a wall of the cabin 2. Each bracket of the first plurality of brackets 5 is connected to a respective bracket of the second plurality of brackets 6 in a movable manner.

This connection is advantageously obtained by means of a hinge 7, which is configured to allow for a rotation around an axis A, said axis A preferably being common to each pair of brackets 5, 6.

More in detail, the brackets 5 have a "U"-shaped cross section, which is open on the opposite side relative the wall 3, and comprise a first end 5a defining the hinge 7 with the respective bracket 6 and a second end 5b, on the opposite side relative to the first end 5a, extending along the wall 3. In particular, the second end 5b has lateral walls with a greater height than the first end 5a.

Similarly, the brackets 6 also have a "U"-shaped cross section, which is open on the opposite side relative the wall used for the fitting to the cabin 2, and comprise a first end 6a defining the hinge 7 with the respective bracket 5 and a second end 5b, on the opposite side relative to the first end 6a.

The extension along the axis A of the brackets 5 is advantageously smaller than the extension 6, so that, when the spoiler system 1 is in the closed position, the brackets 5 are at least partially housed inside the space delimited by the walls of the brackets 6.

The brackets 5 and 6 are preferably made of a metal material. In the example shown herein, the said pluralities of brackets 5, 6 each comprise three brackets 5, 6, precisely an upper bracket 5', 6', a lower bracket 5", 6" and an intermediate bracket 5‴, 6‴ located between the upper and lower brackets 5', 5", 6', 6".

In the embodiment described herein, the hinge 7 comprises a pin system 8, which is carried by the first end 6a of the brackets 6 and around which the first end 5a of the brackets 5 can rotate in a known manner. If needed, the lateral walls of the first end 5a are provided with holes 9, which are sized so as to rigidly house the pin system 8.

The connection apparatus 4 further comprises at least one connection bar 11, which is configured to connect at least some brackets of said plurality of brackets 5 to one another. In particular, in the embodiment shown herein, the bar 11 is a straight bar with a rectangular cross section, which is arranged parallel to the axis A and connects all the brackets 5, with contact, in an intermediate portion 5c between the first and second ends 5a, 5b.

Said intermediate portion 5c preferably defines a seat to allow for the passage of the bar 11. In the case described herein, the seat is obtained by means of a pair of openings made in the lateral walls of the bracket 5 and with sizes that are such as to allow the bar 11 to go through them.

The bar 11 can be fixed to the brackets 5, for example, by means of an omega bracket 12, which is configured to be fixed to the wall 3. In the case described herein, the bar 11 vertically extends under the lower bracket 5" and the omega bracket 12 fixes the bar 11 to the wall 3 in a lower position relative to said lower bracket 5'' .

The connection apparatus 4 can further comprises at least one further connection bar 13, which is configured to connect at least some brackets of said plurality of brackets 6 to one another. In particular, in the embodiment shown herein, the bar 13 is a straight bar with a circular cross section, which is arranged substantially parallel to the axis A. In particular, the bar 13 connects the sole lower bracket 6'' to the intermediate bracket 6‴. In particular, said bar is fixed to the outside of the brackets 6", 6‴, in detail to their first ends 6a.

According to the invention, the connection apparatus comprises selective locking means 15, which are carried by one of the brackets 5 and 6 and cooperate, in contact, with the hinge 7 obtained between them. Said selective locking means are configured to lock the relative rotation between said brackets 5 and 6 in at least two pre-set relative angular limit positions and to permit a relative rotation within said two angular limit positions when a pre-set force is applied between said brackets 5, 6.

In particular, said selective locking means 15 are housed inside the space delimited by the brackets 5, 6 and are advantageously carried by the brackets 6. Preferably, as is the case herein, said selective locking means 15 are carried by the end brackets, namely by the upper bracket 6' ad by the lower bracket 6".

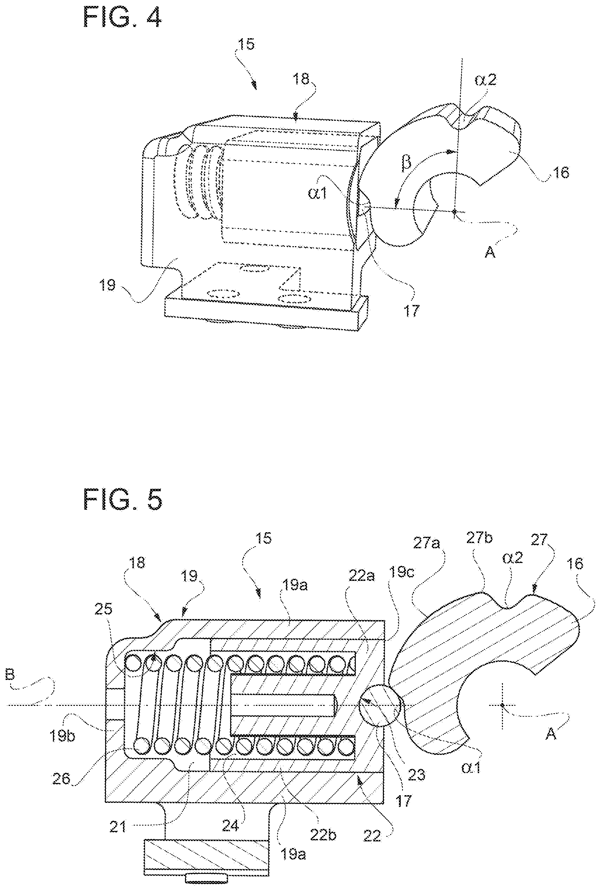

With reference to figures 4 and 5, the selective locking means 15 basically comprise a cam mechanism comprising a cam 16, which is rigidly carried by the pin 8 of the hinge 7, and a cam follower 17, which is configured to cooperate with the profile of the cam 16 and is housed in a support 18 in a movable manner.

The support 18 comprises a housing 19 having a shape that is such as to allow it to be housed inside the bracket 6, namely inside the lateral walls thereof, and be fixed to the latter by means, for example, of threaded elements.

The housing 19 advantageously defines an inner space 21, which is laterally delimited by lateral walls 19a of the housing 19 and, on one side, is axially delimited by a front wall 19b of the housing 19, whereas, on the other side, it is open and communicates with the outside through an opening 19c.

The support 18 further comprises a sliding element 22, which is housed inside the inner space 21 of the housing 19 and is configured to rigidly carry the cam follower 17.

In particular, the sliding element 22 comprises a head 22a, which has a shape that is such as to cooperate, through sliding, with the surface delimiting the space 21 and defines a seat 23 for the cam follower 17.

The sliding element 22 further comprises a lateral wall 22b axially extending, from at least part of the perimeter of the head 22a, along a middle axis B of the space 21, which preferably is perpendicular, in use, to the hinge axis A. In particular, the side wall 22b extends from the entire perimeter of the head 22a and has sizes that are such as to cooperate, through sliding, with the surface delimiting the space 21.

The sliding element 22 also comprises a cylindrical portion 22c extending coaxial to the axis B of the head 22a. In particular, the size of said cylindrical portion 22c is smaller than the inner surface of the lateral wall 22b. Consequently, the lateral wall 22b and the portion 22c define, between them, an annular seat 24, which is radially delimited by them and axially delimited by the sole head 22a, since it is open towards the wall 19b.

The support 18 further comprises elastic means 25, which are interposed between the sliding element 22 and the housing 19 and are configured to generate a force that is such as to push the sliding element 22 outwards, namely along the A out of the opening 19c. In the case described herein, the elastic means 25 preferably comprise a helical spring 26, which is partly housed in the seat 24 and has ends in contact with the wall 19b and the head 22a.

The cam 16 substantially has the shape of a circular sector with a half-circumferential extension and defines a cam profile 27 followed by the cam follower 17. Said cam profile 27 substantially is circular and defines two rest positions *α*₁*, α*₂ obtained as seats in the aforesaid circular profile. Consequently, between the rest positions *α*₁*, α*₂ there is a sliding portion 27a having a circular profile and joined to the rest positions *α*₁*, α*₂ by means of respective joined portions 27b.

The rest positions *α*₁*, α*₂ are placed at an angular distance β, hence defining the maximum useful angular stroke between the brackets 5, 6 and, thus, of the wall 3 relative to the hinge 9. According to the embodiment described herein, said angular distance β is approximately 90°.

According to figure 1, the selective locking means 15 are advantageously arranged in the brackets 6 so as to generate locking forces that are perpendicular to one another. Indeed, in the upper bracket 6', the cam follower 17 (which generates a force that is perpendicular to the hinge axis and parallel to the longitudinal axis of the housing 19, as explained above) generates a force that is perpendicular to the wall 3. On the contrary, in the lower bracket 6'', the cam follower 17 generates a force that is parallel to the wall 3.

As a consequence of what discussed above, the lateral walls of the first portion 6a of the upper bracket 6' are lower than the lateral walls of the first portion 6a of the front bracket 6'', which have to contain, on the inside, the entire housing 19.

The spoiler system 1 described herein can further comprises rubber elements to avoid a direct contact between metal parts or handles, so as to make it easier for the aforesaid elements to be moved. However, since these elements are obvious and known to a person skilled in the art, they will not be further described for the sake of brevity.

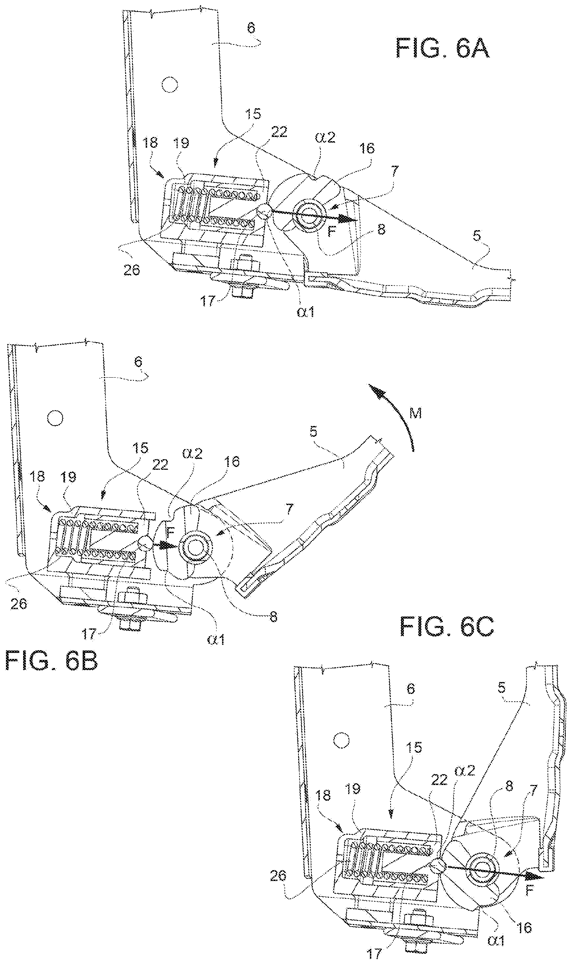

The embodiment of the spoiler system 1 described above works as follows, with reference to figures 6A - 6C.

Figure 6A shows an open configuration of the wall 3, in which the hinge 7 allows for a maximum opening between the brackets 5 and 6. In this configuration, the cam follower 17 is pushed by the spring 26, generating a force F, into the seat *α*₁ and, hence, prevents the cam 16 and, consequently, the pin 8 of the hinge 9 from rotating.

A similar configuration is shown in figure 6C, which shows a closed configuration of the wall 3, in which the hinge 7 allows for a minimum opening between the brackets 5 and 6. In this configuration, the cam follower 17 is pushed by the spring 26, through the usual force F, into the seat *α*₂ and, hence, prevents the cam 16 and, consequently, the pin 8 of the hinge 9 from rotating.

It should be pointed out that, in the cases mentioned above, the coupling between the cam 16 and the cam follower 17 prevents the hinge 9 from moving in both rotation directions, due to the geometry of the cam system described herein.

Figure 6B shows an intermediate operating configuration between the open configuration of figure 6A and the closed configuration of figure 6B. In this condition, an operator of the vehicle applies a pushing force to the wall 3, which is then transmitted to the brackets 5 as a torque acting so as to close them towards the brackets 6. When the torque M exceeds a pre-set value, the force F provided by the spring F, which holds the cam follower in the seat *α*₁*,* is overcome. Then, the cam follower 17 can get out of the seat *α*₁ and, hence, follow the profile 27a of the cam 16 until it gets into the seat *α*₂, where it reaches the new steady position.

The opposite operating condition, shifting from the closed configuration to the open configuration, is identical and, therefore, will not be described in detail, as the only thing that changes is the direction of the torque M applied by the wall 3 to the brackets 5.

In the conditions of figures 6A and 6C, given the skew arrangement of the forces F, the wall 3 is particularly steady and resistant to possible perturbations due to the air flowing on it. Indeed, this arrangement balances possible tilting torques acting upon the wall 3 in different directions.

Owing to the above, the advantages of a spoiler system 1 according to the invention are evident.

The spoiler system 1 comprising the selective locking means 15 described above allows the wall 3 to be firmly held in the open or closed condition and, at the same time, to be easily moved.

Thanks to these selective locking means 15, no additional elements for a further locking of the wall 3 are needed.

The embodiment described herein also allows for a particularly compact system, which, hence, reduces the axial space taken up, when it is closed, by the spoiler system 1.

Furthermore, the system disclosed herein is extremely stable thanks to the special arrangement of the locking means 15, so as to generate skew and perpendicular forces, which, therefore, can compensate tilting torques around different directions.

In addition, the cam mechanism 16, 17 is particularly compact, versatile, easy to be mounted and economic and can be installed on already existing systems, without changing the geometry thereof. Indeed, by changing the shape of the cam 16, namely by varying the angular position of the seats described above or the number thereof, the relative opening angles between the brackets 5, 6 can be changed, thus being adjusted to different types of wall 3 and cabin 2.

Moreover, the system according the invention has a constant behaviour with any operating temperature.

Furthermore, the system is particularly resistant to atmospheric agents and, since it is a "closed" system, does not involve problems due to the dirt that can build up in the hinges.

Finally, the spoiler system 1 according to the invention can be subjected to changes and variants, which, though, do not go beyond the scope of protection set forth in the appended claims.

As already mentioned above, it is possible to change shape and number of brackets 5, 6 as well as shape, position and number of seats *α*₁*, α*₂*.* In addition, the type of movement of the cam follower 17, the shape thereof and the position of the support 18 relative to the bracket 6 can be changed depending on the type of vehicle.

Moreover, the bars 11, 13 can be absent or fixed to the brackets 5, 6 in a different manner.

Finally, if needed, intermediate positions of the cam mechanism 16, 17 can be provided in addition to the ones described above.

## Claims

1. A spoiler system (1) for a land vehicle on wheels, said spoiler system (1) comprising a wall (3) and a connection apparatus (4), the latter being configured to move said wall (3) from a first position facing a wall (2) of said vehicle to a second position having a pre-set inclination with respect to said wall (2) of said vehicle,
said connection apparatus (4) comprising a plurality of first brackets (5) connected to said wall (3) and a plurality of second brackets (6) connectable to said wall (2) of said vehicle, each of said first brackets (5) being hinged by a hinge (7) to respective said second brackets (6),
said connection apparatus (4) comprising selective locking means (15) carried by at least one of said first and second plurality of brackets (5, 6), said selective locking means cooperating in contact with the hinge (7) so as to lock the relative rotation between said first and second plurality of brackets (5, 6) in at least two pre-set angular positions (*α*₁, *α*₂) **characterized in** allowing the relative rotation between said first and second plurality of brackets (5, 6) within said at least two angular positions (*α*₁*, α*₂) when a force having a pre-set value is applied to said wall (3) .

2. The spoiler system according to claim 1, wherein said selective locking means (15) are housed inside said bracket (5, 6).

3. The spoiler system according to claim 1 or 2, wherein said selective locking means (15) are carried by end brackets (5', 6', 5'', 6") of at least one of said first and second plurality of brackets (5, 6).

4. The spoiler system according to one of the claims from 1 to 3, wherein said angular positions (*α*₁*, α*₂) are angularly spaced by approximately 90°.

5. The spoiler system according to one of the preceding claims, wherein said selective locking means (15) comprise a cam mechanism (16, 17).

6. The spoiler system according to claim 5, wherein said cam mechanism comprises a cam (16) carried by a pin (8) of said hinge (7) and a cam follower (17) carried in a mobile manner relative to said at least one of said first and second plurality of brackets (5, 6) and exerting a force (F) on said cam (16), said cam (16) defining a pair of seats in which, when present, said cam follower (17) prevents the rotation of said pin (8).

7. The spoiler system according to claim 6, wherein said cam follower (17) is carried in a mobile manner by a support (18) fixed in said at least one of said first and second plurality of brackets (5, 6), said support (18) comprising a housing (19) and a sliding element (22) that carries said cam follower (17), said support also comprising an elastic means (25) interposed between said housing and said sliding element (22) and configured to impart said force (F) .

8. The system according to claim 6 or 7, when depending on claim 3, wherein said forces (F) exerted by the cam followers (17) on the respective cams (16) of the locking means (15) carried by said end brackets (5', 6', 5", 6") are skew forces.

9. The system according to claim 6 or 7, when depending on claim 3, wherein said forces (F) exerted by the cam followers (17) on the respective cams (16) of the locking means (15) carried by said end brackets (5', 6', 5", 6") are perpendicular to one another.

10. The spoiler system according to one of the preceding claims, wherein said first and second plurality of brackets (5, 6) have a U-shaped cross-section open on opposite sides relative to the wall (2, 3) to which they are fixed.

11. The spoiler system according to one of the preceding claims, wherein said first plurality of brackets (5) has dimensions such as to be, at least partially, housed in said second plurality of brackets (6) when said wall (3) is in said first position.

12. The spoiler system according to one of the preceding claims, comprising a bar (11) connecting at least two of said first plurality of brackets (5) to one another.

13. The spoiler system according to one of the preceding claims, comprising a bar (13) connecting at least two of said second plurality of brackets (6) to one another.

14. A land vehicle on wheels comprising a spoiler system (1) according to one of the preceding claims.

## Patentansprüche

1. Spoilersystem (1) für ein Landfahrzeug auf Rädern, welches Spoilersystem (1) eine Wand (3) und eine Verbindungsvorrichtung (4) umfasst, wobei letztere dazu ausgebildet ist, die Wand (3) aus einer ersten Position, der sie einer Wand (2) des Fahrzeugs zugewandt ist, in eine zweite Position zu bewegen, in der sie eine vorbestimmte Neigung gegenüber der Wand (2) des Fahrzeugs aufweist,
welche Verbindungsvorrichtung (4) eine Mehrzahl erster Beschläge (5), die mit der Wand (3) verbunden sind, und eine Mehrzahl zweiter Beschläge (6) aufweist, die mit der zweiten Wand (2) des Fahrzeugs zu verbinden sind, wobei jeder der ersten Beschläge (5) durch ein Scharnier (7) mit jeweiligen zweiten Beschlägen (6) schwenkbar verbunden ist,
wobei die Verbindungsvorrichtung (4) selektive Blockiermittel (15) umfasst, die von zumindest einer der ersten und zweiten Mehrzahl von Beschlägen (5, 6) getragen werden, welche selektive Blockiermittel in Kontakt mit dem Scharnier (7) derart zusammenwirken, dass sie die relative Rotation zwischen der ersten und zweiten Mehrzahl von Beschlägen (5, 6) in zumindest zwei vorgegebenen Winkelpositionen (α₁, α₂) festlegen, **dadurch gekennzeichnet, dass** die relative Rotation zwischen der ersten und der zweiten Mehrzahl von Beschlägen (5,6) innerhalb der zumindest zwei Winkelpositionen (α₁, α₂) ermöglicht wird, wenn eine Kraft mit einem vorgegebenen Wert auf die Wand (3) ausgeübt wird.

2. Spoilersystem gemäß Anspruch 1, bei welchem die selektiven Blockiermittel (15) innerhalb des Beschlags (5,6) untergebracht sind.

3. Spoilersystem gemäß Anspruch 1 oder 2, bei welchem die selektiven Blockiermittel (15) von Endbeschlägen (5', 6', 5", 6") von zumindest einer der ersten und zweiten Mehrzahl von Beschlägen (5, 6) getragen werden.

4. Spoilersystem gemäß einem der Ansprüche 1 bis 3, bei welchem die Winkelpositionen (α₁, α₂) um etwa 90° winkelversetzt sind.

5. Spoilersystem gemäß einem der vorhergehenden Ansprüche, bei welchem die selektiven Blockiermittel (15) einen Nockenmechanismus (16,17) umfassen.

6. Spoilersystem gemäß Anspruch 5, bei welchem der Nockenmechanismus einen Nocken (16) umfasst, der von einem Stift (8) des Scharniers (7) getragen wird, sowie einen Nockenfolger (17), der beweglich bezüglich zumindest einer der ersten und zweiten Mehrzahl von Beschlägen (5, 6) angebracht ist und eine Kraft (F) auf den Nocken (16) ausübt, wobei der Nocken (16) ein Paar von Sitzen festlegt, in welchen, falls vorhanden, der Nockenfolger (17) die Drehung des Stiftes (8) verhindert.

7. Spoilersystem gemäß Anspruch 6, bei welchem der Nockenfolger beweglich durch ein Lager (18) getragen wird, welches in zumindest einer der ersten und zweiten Mehrzahl von Beschlägen (5, 6) befestigt ist, welches Lager (18) ein Gehäuse (19) und ein Gleitelement (22) umfasst, welches den Nockenfolger (17) trägt, und welches Lager ferner ein elastisches Mittel (25) umfasst, welches zwischen dem Gehäuse und den Gleitelement (22) einliegt und dazu ausgebildet ist, die Kraft (F) auszuüben.

8. System gemäß Anspruch 6 oder 7, sofern abhängig von Anspruch 3, bei welchem die Kräfte (F), die von den Nockenfolgern (17) auf die jeweiligen Nocken (16) der Blockiermittel (15) ausgeübt werden, die von den Endbeschlägen (5', 6', 5", 6") getragen werden, Schrägkräfte sind.

9. System gemäß Anspruch 6 oder 7, sofern abhängig von Anspruch 3, bei welchem die Kräfte (F), die von den Nockenfolgern (17) auf die jeweiligen Nocken (16) der Blockiermittel (15) ausgeübt werden, die von den Endbeschlägen (5', 6', 5", 6") getragen werden, senkrecht zueinanderstehen.

10. Spoilersystem gemäß einem der vorhergehenden Ansprüche, bei welchem die erste und die zweite Mehrzahl von Beschlägen (5,6) einen U-förmigen Querschnitt aufweisen, welche zu den bezüglich der Wand (2, 3), an welcher sie befestigt sind, gegenüberliegenden Seiten offen sind.

11. Spoilersystem gemäß einem der vorhergehenden Ansprüche, bei welchem die erste Mehrzahl von Beschlägen (5) derartige Abmessungen aufweist, dass sie zumindest teilweise in der zweiten Mehrzahl von Beschlägen (6) aufgenommen sind, wenn sich die Wand (3) in der ersten Position befindet.

12. Spoilersystem gemäß einem der vorhergehenden Ansprüche, umfassend einen Träger (11), der zumindest zwei aus der ersten Mehrzahl von Beschlägen (5) miteinander verbindet.

13. Spoilersystem gemäß einem der vorhergehenden Ansprüche, umfassend einen Träger (13), der zumindest zwei aus der zweiten Mehrzahl von Beschlägen (6) miteinander verbindet.

14. Landfahrzeug auf Rädern, umfassend ein Spoilersystem gemäß einem der vorhergehenden Ansprüche.

## Revendications

1. Système de becquet (1) pour un véhicule terrestre sur roues, ledit système de becquet (1) comprenant une paroi (3) et un appareil de liaison (4), celui-ci étant configuré pour déplacer ladite paroi (3) d'une première position faisant face à une paroi (2) dudit véhicule à une seconde position présentant une inclinaison prédéfinie par rapport à ladite paroi (2) dudit véhicule,
ledit appareil de liaison (4) comprenant une pluralité de premières consoles (5) reliées à ladite paroi (3) et une pluralité de secondes consoles (6) pouvant être reliées à ladite paroi (2) dudit véhicule, chacune desdites premières consoles (5) étant articulée par une articulation (7) sur lesdites secondes consoles (6) respectives,
ledit appareil de liaison (4) comprenant des moyens de verrouillage (15) sélectifs portés par au moins l'une desdites première et seconde pluralités de consoles (5, 6), lesdits moyens de verrouillage sélectifs coopérant en contact avec l'articulation (7) de manière à verrouiller la rotation relative entre lesdites première et seconde pluralités de consoles (5, 6) dans au moins deux positions angulaires (α₁, α₂) prédéfinies, **caractérisé en ce qu'**ils permettent la rotation relative entre lesdites première et seconde pluralités de consoles (5, 6) dans lesdites au moins deux positions angulaires (α₁, α₂) lorsqu'une force présentant une valeur prédéfinie est appliquée à ladite paroi (3).

2. Système de becquet selon la revendication 1, dans lequel lesdits moyens de verrouillage (15) sélectifs sont logés à l'intérieur de ladite console (5, 6) .

3. Système de becquet selon la revendication 1 ou 2, dans lequel lesdits moyens de verrouillage (15) sélectifs sont portés par des consoles d'extrémité (5', 6', 5'', 6'') d'au moins l'une desdites première et seconde pluralités de consoles (5, 6).

4. Système de becquet selon l'une des revendications 1 à 3, dans lequel lesdites positions angulaires (α₁, α₂) sont angulairement espacées d'environ 90°.

5. Système de becquet selon l'une des revendications précédentes, dans lequel lesdits moyens de verrouillage (15) sélectifs comprennent un mécanisme de came (16, 17).

6. Système de becquet selon la revendication 5, dans lequel ledit mécanisme de came comprend une came (16) portée par une tige (8) de ladite articulation (7) et un suiveur de came (17) porté d'une manière mobile par rapport à ladite au moins une desdites première et seconde pluralités de consoles (5, 6) et exerçant une force (F) sur ladite came (16), ladite came (16) définissant une paire de sièges dans lesquels, lorsqu'il est présent, ledit suiveur de came (17) empêche la rotation de ladite tige (8).

7. Système de becquet selon la revendication 6, dans lequel ledit suiveur de came (17) est porté d'une manière mobile par un support (18) fixé dans ladite au moins une desdites première et seconde pluralités de consoles (5, 6), ledit support (18) comprenant un boîtier (19) et un élément coulissant (22) qui porte ledit suiveur de came (17), ledit support comprenant également un moyen élastique (25) interposé entre ledit boîtier et ledit élément coulissant (22) et configuré pour appliquer ladite force (F).

8. Système selon la revendication 6 ou 7, dépendant de la revendication 3, dans lequel lesdites forces (F) exercées par les suiveurs de came (17) sur les cames (16) respectives des moyens de verrouillage (15) portés par lesdites consoles d'extrémité (5', 6', 5'', 6'') sont des forces de désalignement.

9. Système selon la revendication 6 ou 7, dépendant de la revendication 3, dans lequel lesdites forces (F) exercées par les suiveurs de came (17) sur les cames (16) respectives des moyens de verrouillage (15) portés par lesdites consoles d'extrémité (5', 6', 5'', 6'') sont perpendiculaires les unes aux autres.

10. Système de becquet selon l'une des revendications précédentes, dans lequel lesdites première et seconde pluralités de consoles (5, 6) présentent une coupe transversale en forme de U ouverte sur des côtés opposés par rapport à la paroi (2, 3) à laquelle elles sont fixées.

11. Système de becquet selon l'une des revendications précédentes, dans lequel ladite première pluralité de consoles (5) présente des dimensions de manière à être, au moins partiellement, logées dans ladite seconde pluralité de consoles (6) lorsque ladite paroi (3) est dans ladite première position.

12. Système de becquet selon l'une des revendications précédentes, comprenant une barre (11) reliant au moins deux de ladite première pluralité de consoles (5) l'une à l'autre.

13. Système de becquet selon l'une des revendications précédentes, comprenant une barre (13) reliant au moins deux de ladite seconde pluralité de consoles (6) l'une à l'autre.

14. Véhicule terrestre sur roues comprenant un système de becquet (1) selon l'une des revendications précédentes.
